# EUROPÄISCHE PATENTSCHRIFT

(11) **EP 1 644 567 B1**
(45) Veröffentlichungstag und Bekanntmachung des Hinweises auf die Patenterteilung: **24.08.2011**
(21) Anmeldenummer: 04762363.2
(22) Anmeldetag: 09.07.2004
(51) Int. Cl.: D06F 37/20, F16F 7/08

(54) **REIBUNGSDÄMPFER INSBESONDERE FÜR TROMMELWASCHMASCHINEN**
FRICTIONAL DAMPER ESPECIALLY FOR CYLINDER WASHING MACHINES
AMORTISSEUR A FRICTION NOTAMMENT DESTINE A DES LAVE-LINGE A TAMBOUR

(30) Priorität: 10.07.2003 DE 10331403
(43) Veröffentlichungstag der Anmeldung: 12.04.2006
(73) Patentinhaber: AWECO APPLIANCE SYSTEMS GmbH & Co. KG, 88099 Neukirch (DE)
(72) Erfinder: DILLMANN, Gerold, 88239 Wangen (DE); WALLERSTORFER, Kurt, A-5204 Strasswalchen (AT); NGUYEN, Ba Loc, D-88099 Neukirch (DE)
(74) Vertreter: Roth, Klaus
(86) Internationale Anmeldenummer: PCT/DE2004/001503
(87) Internationale Veröffentlichungsnummer: WO 2005/007964

(56) Entgegenhaltungen:
- EP-A- 0 407 755
- DE-A- 2 820 651

## Beschreibung

Die Erfindung betrifft einen Reibungsdämpfer, insbesondere für Trommelwaschmaschinen, nach dem Oberbegriff des Anspruchs 1.

Mit der gattungsbildenden europäischen Druckschrift EP 407 755 ist bereits ein Reibungsdämpfer bekannt geworden, der eine in einem zylindrischen Gehäuse koaxial geführte Kolbenstange sowie an deren im Gehäuse befindlichen Ende eine Hülse mit Reibbelägen aufweist, die gegen ein Feder- oder Dämpfungselement axial im Bezug zur Kolbenstange verschiebbar ist. Die Federn sind zwischen separaten Anschlägen gelagert. Die Abstandshülse mit Reibbelägen wird demnach erst ab einer gewissen Amplitude bzw. Hub der Kolbenstange im Gehäuse von der Kolbenstange mitgeführt. Die hiermit realisierte zweistufige Abhängigkeit der Federung bzw. Dämpfung von der Amplitude ist im Bereich der Federn linear bzw. proportional und im Bereich der Reibbeläge konstant. Diese Anordnung ist zylindrisch aufgebaut, so dass Abstandshülse, Reibbeläge und Dämpfungselemente eine entsprechende Geometrie aufweisen müssen. Zudem sind diese Komponenten innengeführt, so dass diese in axialer Richtung auf die Kolbenstange in entsprechender Reihenfolge aufzuschieben und zu fixieren sind.

Darüber hinaus ist aus der Druckschrift DE 28 20 651 bereits ein rechteckiger Reibdämpfer bekannt, wobei der Stößel ein Fenster zur Aufnahme eines bezüglich dem Stößel und dem Gehäuse längsverschiebbaren Schlittens aufweist. Am Schlitten sind Reibbeläge fixiert. Im Inneren des Schlittens sind Spiralfedern gelagert, die eine lineare Abhängigkeit der Bremskraft des Schlittens von der Amplitude erzeugen. Die Federn schlagen demzufolge einerseits im Innern des Schlittens und andererseits an einem separaten Haltelappen mit einem Führungszapfen an.

Nachteilig beim Stand der Technik ist, einerseits die zahlreichen unterschiedlichen und z.T. sehr komplexen Teile als auch die aufwändige Montage des Dämpfers, was entsprechende Herstellungskosten verursacht.

Aufgabe der Erfindung ist es demgegenüber, einen Reibungsdämpfer mit einem Durchbruch bzw. Fenster des Stößels zur Aufnahme eines längsverschiebbaren Schlittens vorzuschlagen, der mit weniger Aufwand und somit kostengünstig herstellbar ist.

Diese Aufgabe wird, ausgehend von einem Reibungsdämpfer der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Demnach zeichnet sich ein erfindungsgemäßer Reibungsdämpfer dadurch aus, dass das Prallelement zwischen und/oder an einer Innenfläche des Fensters und einer Außenfläche des Aufnahmeteils angeordnet ist. Mit dieser Maßnahme wird das Prallelement bzw. die Feder und/oder der Dämpfer direkt bzw. unmittelbar sowohl am Aufnahmeteil bzw. Schlitten als auch direkt bzw. unmittelbar am Stößel gelagert. Im Sinn der Erfindung kann durchaus eine vorteilhafte Belegung bzw. Beschichtung des Aufnahmeteils und/oder des Stößels vorgesehen werden. Gemäß der Erfindung sind separate, speziell ausgebildete Anschlagelemente, wie sie beim o.g. Stand der Technik funktionswesentlich sind, nicht notwendig bzw. nicht vorhanden. Dementsprechend verringert sich die Teileanzahl als auch der Montageaufwand zur Herstellung des erfindungsgemäßen Reibdämpfers. Erfindungsgemäß ist ein besonders günstiger Reibdämpfer herstellbar.

Vorteilhafterweise ist das Gehäuse als weitgehend geschlossenes Gehäuse mit einer Montageöffnung zum Einführen des Stößels ausgebildet. Dies vereinfacht die Herstellung des Gehäuses. Beispielsweise weist das Gehäuse vorzugsweise zwei umkantete Metallbleche auf, wobei ein Metallblech eine bezüglich des Querschnitts im Bereich für den Stößel U-förmige Ausbildung und ein Blech ein in das offene U einzuführende Ausbildung aufweist. Vorzugsweise umfasst das Gehäuse einen Fixierabschnitt zum Fixieren des Reibdämpfers an einem Maschinengehäuse bzw. an einer Chassis einer Waschmaschine oder dergleichen. Einen zweiten, entsprechenden Fixierabschnitt des Reibdämpfers umfasst der Stößel.

Die Fixierung des Reibdämpfers an entsprechenden Gehäusen oder dergleichen kann unter anderem mittels einem Bolzen, Niete, Stift, Nagel, Schraube oder dergleichen erfolgen, welche mit einem Dämpfungselement wie z.B. einem Elastomer umhüllt ist. Beispielsweise weist der Elastomer Rastnasen oder dergleichen auf, die eine Fixierung am Fixierabschnitt des Gehäuses und/oder des Stößels gewährleisten.

Das Aufnahmeteil, das beispielsweise in einer Gleitführung am Stößel bzw. an der Kolbenstange geführt sein kann, ermöglicht beispielsweise einen Anschlag als Abstützung für das amplitudenabhängige Prallelement auszubilden. Insbesondere ist es hierbei möglich, einen solchen Anschlag stirnseitig an dem Aufnahmeteil anzubringen. Eine solche Anordnung erleichtert die Druckbeaufschlagung des entsprechenden Prallelementes.

Vorzugsweise sind die Innenfläche des Fensters und/oder die Außenfläche des Aufnahmeteils im Wesentlichen quer, insbesondere nahezu senkrecht zur Gehäuselängsachse ausgerichtet. Vorteilhafterweise ist die Innenfläche des Fensters und/oder die Außenfläche des Aufnahmeteils weitgehend eben ausgebildet. Jede dieser vorteilhaften Varianten gewährleistet eine besonders einfache Realisierung des Reibdämpfers bzw. der Montage der Komponenten.

In einer besonderen Weiterbildung der Erfindung ist der Stößel und/oder das Aufnahmeteil und/oder das Prallelement derart ausgebildet, dass eine seitliche, d.h. quer zur Gehäuselängsachse gerichtete, Montage aller Komponenten realisierbar ist. Bevorzugt ist eine seitliche, am Umfang des Aufnahmeteils ausgebildete Führung bzw. Führungsfläche vorgesehen. Vorteilhafterweise sind wenigstens zwei, sich im Wesentlichen gegenüberliegende bzw. an zwei gegenüber angeordneten Seiten des Aufnahmeteils vorgesehene Führungsflächen zum Führen am Stößel vorgesehen. Hiermit wird eine vorteilhafte äußere Führung des Aufnahmeteils bzw. Schlittens realisierbar. Dies ermöglicht wiederum eine besonders einfache Montage des Aufnahmeteils.

In einer vorteilhaften Ausführungsform der Erfindung entspricht die Innenfläche des Fensters und/oder die Außenfläche des Aufnahmeteils wenigstens zu 80% oder zu 90%, vorzugsweise im Wesentlichen der Querschnittsfläche des Aufnahmeteils. Hierdurch werden verhältnismäßig große Flächen bzw. Anschläge umsetzbar, so dass sich der Flächendruck und somit entsprechende Beanspruchungen, insbesondere auf Biegung, vorteilhaft verringert. Erfindungsgemäß wird eine besonders stabile Konstruktion verwirklichbar, die eine hohe Lebensdauer aufweist.

Beispielsweise weist ein vergleichsweise dünner Brückenbereich des Stößels die erfindungsgemäße Innenfläche des Fensters auf. Der Brückenbereich bzw. Anschlag ist vorteilhafterweise zwischen zwei im Wesentlichen auf Zug beanspruchten Zugabschnitten des Stößels angeordnet bzw. fixiert. Vorteilhafterweise umfassen die beiden Zugabschnitte Führungsflächen zur Führung des Aufnahmeteils. Die Führungsflächen des Stößels sind bevorzugt Abschnitte von in Achsrichtung ausgerichteten Innenflächen des Stößels. Beispielsweise umfasst eine axial ausgerichtete Anformung bzw. Leiste oder dergleichen die Führungsflächen des Stößels. Vorzugsweise sind die Führungsflächen des Aufnahmeteils in einer Ausnehmung bzw. Nut oder dergleichen vorgesehen.

Gegebenenfalls können Reibbelag und Prallelement quer zur Gehäuselängsachse bzw. in radialer Richtung nebeneinander bzw. versetzt zueinander angeordnet werden.

Vorteilhafterweise sind der Reibbelag und das Prallelement quer zur Gehäuselängsachse wenigstens teilweise überlappend, insbesondere im Wesentlichen vollständig überlappend angeordnet. Beispielsweise sind Reibbelag und Prallelement in axialer Richtung nebeneinander bzw. benachbart angeordnet. Hiermit ist ein besonders schmaler Reibdämpfer umsetzbar. Darüber hinaus können entsprechend angeordnete Reibbeläge bzw. Aufnahmeteile, Prallelemente, etc. vorteilhaft von einer Seite montiert werden, was zusätzlich den Montageaufwand und somit die Herstellungskosten reduziert.

In einer bevorzugten Variante der Erfindung ist wenigstens in axialer Richtung zwischen dem Reibbelag und dem Prallelement eine Wand des Aufnahmeteils vorgesehen. Die Wand umfasst insbesondere die Außenfläche gemäß der Erfindung, an dem das Prallelement in vorteilhafter Weise ansteht. Vorzugsweise weist die Außenfläche und/oder die Wand eine Stirnseite und/oder Schmalseite des Aufnahmeteils aus. Beispielsweise steht die Wand radial etwas über, so dass eine besonders einfache, insbesondere formschlüssige Fixierung des Reibbelags in axialer Richtung am Aufnahmeteil realisierbar ist. Die Wand ist vorzugsweise als Anschlag zur Fixierung des Reibbelags ausgebildet.

Vorteilhafterweise ist ein wenigstens über 80% oder 90% der Amplitude, insbesondere im Wesentlichen über die gesamte Amplitude erstreckendes Prallelement vorgesehen. Mit dieser Maßnahme ist die Abhängigkeit des Abbremsens bzw. Dämpfens von der Amplitude besonders vorteilhaft kontrollierbar bzw. einstellbar. Hierbei kann das Prallelement bzw. können die vom Prallelement generierten Gegenkräfte flexibel an unterschiedlichste Anwendungen bzw. an unterschiedlichste Trommelwaschmaschinen insbesondere verschiedenster Hersteller angepasst werden. Beispielsweise können nahezu baugleiche Reibdämpfer mit unterschiedlichsten Feder-/Dämpfungs charakteristigen dadurch verwirklicht werden, dass verschiedenste Prallelemente gemäß der Erfindung eingesetzt werden. Zum Beispiel können Prallelemente in Abhängigkeit des Anwendungsfalls mit unterschiedlichen Materialien, Materialzusammensetzungen, Porositäten, etc. und/oder geometrischen Formen bzw. Profilen vorgesehen werden.

Vorzugsweise ist das Prallelement derart ausgebildet, dass die Abhängigkeit des Prallelementes von der Amplitude überproportional und stetig ist. Es hat sich gezeigt, dass ein entsprechend realisiertes Prallelement besonders vorteilhafte Eigenschaften des Reibdämpfers erzeugt. Beispielsweise kann am Anfang der Auslenkung des Aufnahmeteils nahezu keine Abbremsung bzw. Dämpfung und/oder insbesondere eine weitgehend reibungsfreie Führung vorgesehen werden, so dass ein Freihub des Aufnahmeteils verwirklicht wird. Im Bereich des Freihubs kann der Stößel bzw. das Gehäuse, das bedeutet z.B. auch, die Trommel der Waschmaschine, weitestgehend frei schwingen.

Beispielsweise ist das Prallelement als Federelement mit nahezu keiner oder nur sehr geringer Dämpfungswirkung ausgebildet, so dass das Abbremsen mit nur geringer oder weitgehend ohne Wärmeerzeugung realisierbar ist. Demzufolge wird der Reibdämpfer gemäß der Erfindung im Betrieb, insbesondere beim Schwingen mit Auslenkungen, die innerhalb des Freibubes und/oder innerhalb der Auslenkbarkeit des Aufnahmeteils erfolgen, nur gering erwärmt. Lediglich bei Auslenkungen des Stößels relativ zum Gehäuse, die eine Verstellung des Reibbelages gegenüber dem Gehäuse bewirken, wird in relevanter Weise Wärmeenergie gemäß der Erfindung erzeugt.

Weiterhin kann durch entsprechende Ausbildung der amplitudenabhängigen Prallelemente die Federungs- bzw. Abbremsungscharakteristik hub-/wegabhängig eingestellt werden. Vorzugsweise weist das Prallelement unterschiedliche Zonen zur Erzeugung der gewünschten Abhängigkeit von der Amplitude auf. Beispielsweise wird dies mit unterschiedlichen Materialien bzw. Materialgefügen oder dergleichen realisiert.

Vorzugsweise ist die geometrische Form des Prallelementes an die gewünschte Abhängigkeit von der Amplitude angepasst. Durch entsprechende Profilierungen oder ähnlichem der verformbaren Elemente können beispielsweise gewünschte Kraft-Wegkurvenverläufe eingestellt werden. Beispielsweise können Profilierungen in und/oder quer zur Richtung der Gehäuselängsachse vorgesehen werden.

Vorteilhafterweise weist das Prallelement wenigstens einen in Richtung der Gehäuselängsachse sich verjüngenden Bereich auf. Hiermit wird in besonders eleganter Weise ein überproportionaler und stetiger Verlauf der Amplitudenabhängigkeit des Prallelementes realisierbar. Zum Beispiel ist der verjüngende Bereich als Kreissegmentabschnitt ausgebildet.

In einer vorteilhaften Ausführungsform der Erfindung weist der Bereich des Prallelements eine Trapezform oder eine Dreieckform auf. Entsprechende Formen sind besonders einfach herstellbar.

In einer besonderen Weiterbildung der Erfindung besteht wenigstens das amplitudenabhängige Prallelement im Wesentlichen aus einem Elastomer und/oder Schaumstoff und/oder Gummimaterial. Entsprechende Prallelemente mit unterschiedlichsten bzw. mit z.B. den oben genannten vorteilhaften Formen sind hiermit einerseits besonders einfach herstellbar und andererseits sehr leicht montierbar, so dass die Montage vereinfacht und die Kosten für einen Reibdämpfer gemäß der Erfindung weiter verringert werden können.

In einer vorteilhaften Variante der Erfindung weist in Umfangsrichtung und quer zur Gehäuselängsachse zwischen zwei Reibbelägen das Aufnahmeteil wenigstens eine Führungsfläche zur Führung am Stößel auf. Hiermit ist eine besonders einfache und äußere Führung des Aufnahmeteils bzw. des Schlittens realisierbar. Vorzugsweise sind wenigstens zwei auf gegenüberliegenden Seiten des Aufnahmeteils angeordnete Führungsflächen zur Führung des Aufnahmeteils vorgesehen. Hierbei kann die Führung lediglich als zwei in Gehäuselängsachse ausgerichtete Anschläge ausgebildet werden, zwischen denen das Aufnahmeteil gelagert ist. Beispielsweise umfasst die Führung eine in Achsrichtung ausgerichtete Nut-Feder-Einheit. Vorzugsweise weist das Aufnahmeteil die Nut und der Stößel die Feder auf, so dass der entsprechende Stößelabschnitt vorteilhaft verstärkt wird, was die Stabilität verbessert bzw. ermöglicht, den Stößelabschnitt ansonsten vergleichsweise dünn auszubilden. Hiermit kann eine vorteilhafte Dimensionierung des Stößels und/oder des Aufnahmeteils realisiert werden.

Vorteilhafterweise ist zwischen der Führungsfläche des Aufnahmeteils und einer Führungsfläche des Stößels ein Spiel vorgesehen. Das Spiel gemäß der Erfindung gewährleistet eine besonders reibungsarme Gleitführung des Aufnahmeteils am Stößel. Beispielsweise werden die Führungsflächen geschmiert, so dass nahezu keine Reibung vorhanden ist. Hierdurch wird eine Wärmeerzeugung aufgrund der Führung wirkungsvoll minimierbar.

In einer bevorzugten Ausgestaltung der Erfindung sind mindestens zwei sich gegenüberliegende Reibbeläge und zwei, sich gegenüberliegende Führungsflächen des Aufnahmeteils vorgesehen, wobei die Führungsflächen quer zur Gehäuselängsachse und in Umfangsrichtung betrachtet jeweils zwischen den Reibbelägen und/oder quer zu den Reibbelägen angeordnet sind. Hiermit wird eine vorteilhafte Entkopplung der durch die Reibbeläge erzeugten (Einspann-) Kräfte und der entsprechenden Führungskräfte der Führungen erreicht, so dass die Führungskräfte z.B. mittels eines Spiels, Schmierstoffs oder dergleichen vorteilhaft minimierbar sind.

In einer speziellen Variante der Erfindung sind mehrere, quer zur Gehäuselängsachse nebeneinander angeordnete Prallelemente vorgesehen. Beispielsweise weisen diese Prallelemente unterschiedlichste Formen, Porositäten und/oder Materialien auf, so dass die Abbremsung vorteilhaft einstellbar ist.

In einer besonderen Weiterbildung der Erfindung sind der Reibbelag bzw. die Reibbeläge aus einem Flachmaterial gefertigt, was z.B. durch einfaches Stanzen oder Schneiden möglich ist. Auf diese Weise können die Reibbeläge erheblich einfacher gefertigt werden.

In einer bevorzugten Ausführungsform weist das Gehäuse wenigstens im Bereich der Reibbeläge einen mehreckigen, bevorzugt rechteckigen Querschnitt auf. Vorzugsweise sind wenigstens annähernd ebene Reibflächen in dem Gehäuse vorgesehen. An die Reibflächen können z.B. die aus Flachmaterial gefertigten Reibbeläge ohne oder unter nur unwesentlichen Verformungen vorteilhaft angefügt werden.

Vorzugsweise werden auch das wenigstens eine amplitudenabhängige Prallelement, nachfolgend auch alternativ als Dämpfungselement bezeichnet, wenigstens teilweise aus Flachmaterial gefertigt, was die Herstellung des Reibungsdämpfers weiter vereinfacht. Gegebenenfalls kann bei entsprechenden Federungs-/Dämpfungseigenschaften für den oder die Reibbeläge auch das gleiche Material wie für das oder die Prallelemente Verwendung finden.

In einer anderen Ausführungsform werden die Reibbeläge so ausgebildet, dass sie das/die amplitudenabhängigen

Prallelemente umfassen. Hierdurch verringert sich die Anzahl der erforderlichen Bauelemente.

Bevorzugt umfassen die amplitudenabhängigen Prallelemente ein bezogen auf den montierten Zustand wenigstens in axialer Richtung der Kolbenstange verformbares Material. Dies kann beispielsweise mit Hilfe eines Elastomers, Gummimaterials oder eines Schaumstoffs z.B. mit offenen oder geschlossenen Poren bewerkstelligt werden, wobei das Material vorteilhafterweise so gewählt wird, dass es eine sehr gute Federdämpfung und z.B. eine Eigendämpfung bei der Rückverformung aufweist.

Vorzugsweise wird wenigstens ein Endbereich wenigstens eines Reibbelags als amplitudenabhängiges Prallelement ausgebildet. Dies kann dadurch bewirkt werden, dass der Reibbelag wenigstens im Endbereich ein entsprechend verformbares Material umfasst. Die amplitudenabhängige bremsende Wirkung ergibt sich sodann beim Stauchen des Reibbelags beim Auflaufen auf einen entsprechenden, im Bezug zur Kolbenstange feststehenden Anschlag bzw. auf die Innenfläche des Stößels gemäß der Erfindung.

Wie bereits oben angeführt, wird ein erfindungsgemäßer Reibbelag bevorzugt so ausgebildet, dass wenigstens zwei Reibbeläge vorhanden sind. Dies erhöht die Reibung bei kompakter Bauform und ermöglicht darüber hinaus einen symmetrischen Aufbau mit den damit verbundenen Vorteilen bezüglich der im Betrieb auftretenden Kräfte.

Diese Reibbeläge werden bevorzugt auf zwei gegenüberliegenden Seiten des Stößels bzw. der Kolbenstange bzw. des Gehäuse des

Reibungsdämpfers angeordnet. Eine solche Anordnung hat den Vorteil, dass sich die Kräfte ausgleichen, die durch das Einspannen des Reibbelags zwischen Gehäuse und Kolbenstange bzw. je nach Ausführungsform dem Aufnahmeelement für den Reibbelag entstehen, so dass zusätzliche Abstützungen der Aufnahme des Reibbelags nicht erforderlich sind.

Die Anordnung mit zwei gegenüberliegenden Reibbelägen unter Verwendung von Flachmaterial ist besonders vorteilhaft bei einem Reibungsdämpfer mit rechteckigem oder quadratischem Querschnitt. Generell ist es von Vorteil, die Form der Reibbeläge an die Innenkontur des Dämpfergehäuses anzupassen, da hierdurch die Innenfläche des Gehäuses unmittelbar als Reibfläche verwendbar ist.

Ein Ausführungsbeispiel ist in der Zeichnung dargestellt und wird anhand der Figuren nachfolgend näher erläutert.

Im Einzelnen zeigen
- Figur 1: eine schematische Draufsicht auf eine erfindungsgemäße Kolbenstange,
- Figur 2: einen Querschnitt durch eine Kolbenstange gemäß Figur 1 im Bereich der Reibbeläge,
- Figur 3: eine Draufsicht auf eine weitere Ausführungsform einer erfindungsgemäßen Kolbenstange mit Reibbelägen,
- Figur 4: eine Figur 3 entsprechend der Darstellung ohne Reibbeläge und
- Figur 5: einen ausschnittsweise im Bereich der Reibbeläge dargestellten Längsschnitt durch eine Kolbenstange gemäß Figur 3.

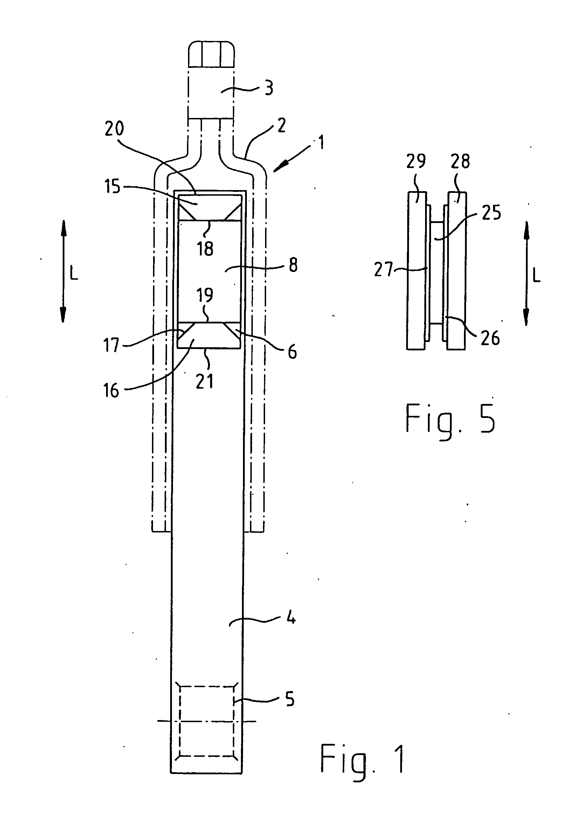

Die Reibungsdämpfer 1 gemäß Figur 1 umfasst ein Gehäuse 2, an dem eine Befestigungsöse 3 vorgesehen ist.

In dem Gehäuse 2 ist ein Stößel 4 geführt, der an dem der Befestigungsöse 3 gegenüberliegenden Ende ebenfalls eine Befestigungsöse 5 aufweist. Die Befestigungsösen 3, 5 dienen der Befestigung bzw. Fixierung, beispielsweise an einem Chassis einer Trommelwaschmaschine einerseits und an der Waschtrommel andererseits.

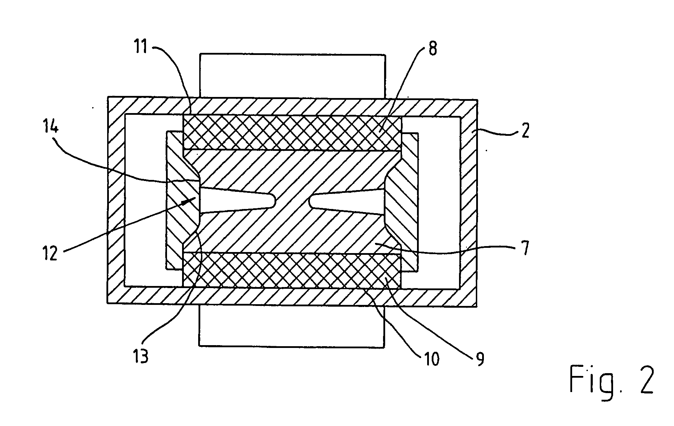

Der Stößel 4 ist an seinem im Gehäuse 2 befindlichen Ende mit einem rechteckigen Fenster bzw. Durchbruch 6 versehen. In diesem Durchbruch 6 ist ein Schlitten bzw. Aufnahmeteil 7 (vgl. Figur 2) längs, d.h. in Richtung des Doppelpfeils L, verschiebbar gelagert. Das Aufnahmeteil 7 trägt beidseits zwei Reibbeläge 8, 9, die sich an der entsprechenden Reibfläche 10, 11 unter Reibschluss mit der eingestellten Spannung anfügen.

Wie anhand von Figur 2 erkennbar ist, ist eine Linearführung 12 in Form einer im Aufnahmeteil 7 angebrachten Nut 13 und einem korrespondierenden im Aufnahmeteil 7 vorgesehenen Vorsprung 14 vorgesehen.

Der Durchbruch 6 ist von größerer Länge als das Aufnahmeteil 7, so dass stirnseitig Platz für jeweils ein weg- oder amplitudenabhängiges Prallelement 15, 16 ist. In der vorliegenden Ausführungsform sind die Prall- bzw. Federungs-/Dämpfungselemente 15, 16 mit Abschrägungen 17 versehen, so dass sich hierdurch eine entsprechende hub- oder wegabhängige Gegenkraft ergibt. Der Widerstand der Prallelemente 15, 16 nimmt durch die dargestellte geometrische Form überproportional mit dem Eindrücken zu.

An dieser Stelle sind auch andere Geometrien für entsprechende Kurvenverläufe zwischen Hub- und Gegenkraft möglich.

Der Reibungsdämpfer 1 ermöglicht beim Ausziehen oder Eindrücken des Stößels 4 aus bzw. in das Gehäuse 2 zunächst eine Verschiebung des Stößels 4, ohne das Aufnahmeteil 7 mit den Reibbelägen 8 mitzunehmen. Hierbei wird jeweils das entsprechende Prallelement 15, 16 zwischen der entsprechenden Stirnseite 18, 19 des Aufnahmeelementes 7 und dem zugehörigen Anschlag 20, 21 zusammengedrückt. Je stärker das Prallelement 15, 16 zusammengedrückt ist, desto größer wird die daraus resultierende Gegenkraft, wobei der Kraft-Wegverlauf zusätzlich durch die Geometrie der Prallelemente 15, 16 vorgegeben werden kann.

Bei Überschreiten einer ausreichenden Gegenkraft wird das Aufnahmeelement 7 mitgezogen bzw. gedrückt, wobei die Reibbeläge 8, 9 an der entsprechenden korrespondierenden Reibfläche 10, 11 des Gehäuses 2 ihre dämpfende Wirkung entfalten.

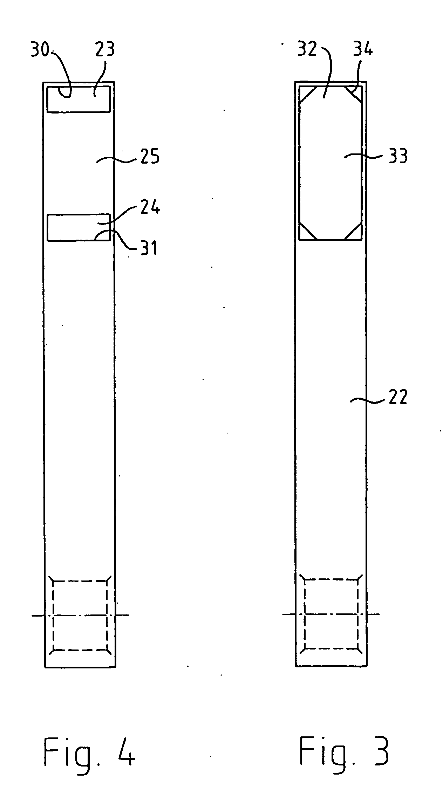

Die Ausführungen gemäß den Figuren 3, 4 und 5 zeigt eine Möglichkeit, die Prallelemente in die Reibbeläge zu integrieren.

Der Stößel 22 weist an seinem in das Gehäuse 2 ragenden Ende zwei Ausnehmungen 23, 24 auf. Darüber hinaus ist er im Bereich der Reibbeläge als flache Platte 25 ausgeführt, die beidseits Gleitflächen 26, 27 aufweist. Beidseits der flachen Platte 25 werden Reibbeläge 28, 29 auf die Gleitflächen 26, 27 aufgelegt.

Die beiden in Längsrichtung L am meisten voneinander beabstandeten Innenflächen 30, 31 der Ausnehmungen 23, 24 dienen in dieser Ausführungsform als Anschlag für die Reibbeläge 28,29 integrierte Prallelemente 32, 33. Die Prallelemente 32, 33 ergeben sich durch die Länge der Reibbeläge 28, 29, die so groß gewählt werden, dass die Reibbeläge 28, 29 stirnseitig auf Höhe der Innenflächen 30, 31 enden. Durch den Vordruck, der durch das Einfügen des Stößels mit Reibbelägen 28, 29 in das in den Figuren 3, 4 und 5 nicht dargestellte Gehäuse erzeugt wird, biegen sich die Endbereiche der Reibbeläge, d.h. die Prallelemente 32, 33 so weit nach innen, dass sie stirnseitig an den Innenflächen 30, 31 anschlagen.

Die Kraft-Weg-Charakteristik der Prallelemente 32, 33 ist wiederum durch Abschrägungen 34 vorgegeben. Auch in dieser Ausführungsform sind andere Formgebungen für weitere gewünschte Kraft-Weg-Charakteristiken denkbar.

Bei einem Zug- oder Druck auf den Stößel 22 innerhalb eines Gehäuses 2 ergibt sich zunächst eine Verformung der Reibbeläge 28, 29 vor allem in ihren Endbereichen, die somit die Prallelemente 32, 33 bilden. Dabei ist eine Relativbewegung zwischen Stößel 22 und Reibbelägen 28, 29 aufgrund der vorgesehenen Gleitflächen 26, 27 möglich.

Erst bei Überschreiten einer entsprechenden Gegenkraft, die durch Verformung der Prallelemente 32, 33 erzeugt wird, werden die Reibbeläge 28, 29 insgesamt gegenüber dem nicht näher dargestellten Gehäuse 2 mitgenommen und verschoben. Sobald die Verschiebung einsetzt, ergibt sich die normale Reibungsdämpfung aufgrund der Reibung der Reibbeläge 28, 29 an der korrespondierenden Reibfläche des Gehäuses 2, im einfachsten Fall an der Innenwandung des Gehäuses 2.

Auch diese Ausführungsform eignet sich besonders gut für einen Reibungsdämpfer mit quadratischem oder rechteckigem Querschnitt bzw. mit zwei im Wesentlichen parallelen gegenüberliegenden Reibflächen.

Der Aufbau dieses zweiten Ausführungsbeispiels ist gegenüber dem ersten Ausführungsbeispiel nochmals vereinfacht, da hier zur Montage lediglich die Reibbeläge 28, 29 auf den entsprechenden Stößel 22 aufgelegt und gemeinsam mit diesem in ein zugehöriges Gehäuse 2 eingeführt werden müssen.

Die Reibbeläge und/oder die Prallelemente können in beiden Ausführungsformen durch Zurichten eines entsprechenden Flachmaterials mit wenig Aufwand gefertigt werden. In der letztgenannten Ausführungsform sind zugleich mit dem Zurichten der Reibbeläge 28, 29 die Prallelemente 32, 33 fertiggestellt.

In der ersten Ausführungsform gemäß Figur 1 und 2 können die Prallelemente 15, 16 grundsätzlich ebenfalls aus dem gleichen Flachmaterial wie die Reibbeläge hergestellt werden, wobei je nach Geometrie hier das entsprechende Flachmaterial lamellenartig in der Quer- oder Längsrichtung übereinander bzw. aneinander gelegt werden kann.

Die dargestellten Ausführungsbeispiele veranschaulichen bereits zwei unterschiedliche Varianten für einen erfindungsgemäßen Reibungsdämpfer.

### Bezugszeichenliste:

- 1: Reibungsdämpfer
- 2: Gehäuse
- 3: Befestigungsöse
- 4: Stößel
- 5: Befestigungsöse
- 6: Durchbruch
- 7: Aufnahmeteil
- 8: Reibbelag
- 9: Reibbelag
- 10: Reibfläche
- 11: Reibfläche
- 12: Linearführung
- 13: Nut
- 14: Vorsprung
- 15: Prallelement
- 16: Prallelement
- 17: Abschrägung
- 18: Stirnseite
- 19: Stirnseite
- 20: Anschlag
- 21: Anschlag
- 22: Stößel
- 23: Ausnehmung
- 24: Ausnehmung
- 25: Platte
- 26: Gleitfläche
- 27: Gleitfläche
- 28: Reibbelag
- 29: Reibbelag
- 30: Innenfläche
- 31: Innenfläche
- 32: Prallelement
- 33: Prallelement
- 34: Abschrägung

## Patentansprüche

1. Reibungsdämpfer, insbesondere für Trommelwaschmaschinen mit Schleudergang, mit einem Gehäuse (2) sowie einem in dem Gehäuse (2) parallel zur Gehäuselängsachse angeordneten und aus dem Gehäuse (2) herausgeführten, beweglichen Stößel (4), der an seinem im Gehäuse (2) befindlichen Ende mit wenigstens einem Fenster (6) versehen ist, wobei im Fenster (6) wenigstens ein bezüglich des Stößels (4) längsbewegbares Aufnahmeteil (7) zur Aufnahme eines Reibbelags (8, 9) und wenigstens ein amplitudenabhängiges Prallelement (15, 16, 32, 33) zum Abbremsen der Bewegung des Aufnahmeteils (7) vorgesehen ist, **dadurch gekennzeichnet, dass** das Prallelement (15, 16, 32, 33) zwischen einer Innenfläche (20, 21) des Fensters (6) und einer Außenfläche (18, 19) des Aufnahmeteils (7) angeordnet ist.

2. Reibungsdämpfer nach Anspruch 1, **dadurch gekennzeichnet, dass** die Innenfläche (20,21) des Fensters (6) und die Außenfläche (18, 19) des Aufnahmeteils (7) im Wesentlichen quer zur Gehäuselängsachse ausgerichtet sind.

3. Reibungsdämpfer nach einem der vorgenannten Ansprüche, **dadurch gekennzeichnet, dass** die Innenfläche (20, 21) des Fensters (6) und/oder die Außenfläche (18, 19) des Aufnahmeteils (7) im Wesentlichen der Querschnittsfläche des Aufnahmeteils (7) entspricht.

4. Reibungsdämpfer nach einem der vorgenannten Ansprüche, **dadurch gekennzeichnet, dass** der Reibbelag (8, 9, 28, 29) und das Prallelement (15, 16, 32, 33) quer zur Gehäuselängsachse wenigstens teilweise überlappend angeordnet sind.

5. Reibungsdämpfer nach einem der vorgenannten Ansprüche, **dadurch gekennzeichnet, dass** ein im Wesentlichen über die gesamte Amplitude erstreckendes Prallelement (15, 16, 32, 33) vorgesehen ist.

6. Reibungsdämpfer nach einem der vorgenannten Ansprüche, **dadurch gekennzeichnet, dass** die Abhängigkeit des Prallelementes (15, 16, 32, 33) von der Amplitude überproportional und stetig ist.

7. Reibungsdämpfer nach einem der vorhergehenden Ansprüche, **dadurch gekennzeichnet, dass** die geometrische Form des Prallelementes (15, 16, 32, 33) an die gewünschte Abhängigkeit von der Amplitude angepasst ist.

8. Reibungsdämpfer nach einem der vorhergehenden Ansprüche, **dadurch gekennzeichnet, dass** das Prallelement (15, 16, 32, 33) wenigstens einen in Richtung der Gehäuselängsachse sich verjüngenden Bereich (17, 34) aufweist.

9. Reibungsdämpfer nach einem der vorhergehenden Ansprüche, **dadurch gekennzeichnet, dass** der Bereich (17, 34) des Prallelements (15, 16, 32, 33) eine Trapezform oder eine Dreieckform aufweist.

10. Reibungsdämpfer nach einem der vorhergehenden Ansprüche, **dadurch gekennzeichnet, dass** wenigstens annähernd ebene Reibflächen (10, 11) in dem Gehäuse (2) vorgesehen sind.

11. Reibungsdämpfer nach einem der vorgenannten Ansprüche, **dadurch gekennzeichnet, dass** wenigstens das amplitudenabhängige Prallelement (15, 16, 32, 33) im Wesentlichen aus einem Elastomer und/oder Schaumstoff und/oder Gummimaterial besteht.

12. Reibungsdämpfer nach einem der vorgenannten Ansprüche, **dadurch gekennzeichnet, dass** wenigstens ein Reibbelag (33) das amplitudenabhängige Prallelement (32, 33) umfasst.

13. Reibungsdämpfer nach einem der vorgenannten Ansprüche, **dadurch gekennzeichnet, dass** wenigstens zwei Reibbeläge (8, 9, 28, 29) auf gegenüberliegenden Seiten des Stößels (4) angeordnet sind.

14. Reibungsdämpfer nach einem der vorgenannten Ansprüche, **dadurch gekennzeichnet, dass** in Umfangsrichtung und quer zur Gehäuselängsachse zwischen zwei Reibbelägen (8, 9, 28, 29) das Aufnahmeteil (7) wenigstens eine Führungsfläche (12) zur Führung am Stößel (4) aufweist.

15. Reibungsdämpfer nach einem der vorgenannten Ansprüche, **dadurch gekennzeichnet, dass** zwischen der Führungsfläche (12) des Aufnahmeteils (7) und einer Führungsfläche (12) des Stößels (4) ein Spiel vorgesehen ist.

16. Reibungsdämpfer nach einem der vorhergehenden Ansprüche, **dadurch gekennzeichnet, dass** mehrere, quer zur Gehäuselängsachse nebeneinander angeordnete Prallelemente vorgesehen sind.

17. Trommelwaschmaschine **dadurch gekennzeichnet, dass** die Trommel mit einem Reibungsdämpfer nach einem der vorgenannten Ansprüche im Chassis befestigt ist.

## Claims

1. Friction damper, in particular for drum washing machines with a spin cycle, comprising a housing (2) and a movable plunger (4) arranged in the housing (2) parallel to the housing longitudinal axis and guided out of the housing (2), which plunger is provided at its end located in the housing (2) with at least one window (6), wherein in the window (6) at least one mounting part (7) is provided which can be moved longitudinally in relation to the plunger (4) for mounting a friction lining (8, 9) and at least one amplitude-dependent impact element (15, 16, 32, 33) is provided for braking the movement of the mounting part (7), **characterised in that** the impact element (15, 16, 32, 33) is arranged between an inner surface (20, 21) of the window (6) and an outer surface (18, 19) of the mounting part (7).

2. Friction damper according to claim 1, **characterised in that** the inner surface (20, 21) of the window (6) and the outer surface (18, 19) of the mounting part (7) are aligned essentially at right angles to the longitudinal axis of the housing.

3. Friction damper according to any one of the preceding claims, **characterised in that** the inner surface (20, 21) of the window (6) and/or the outer surface (18, 19) of the mounting part (7) corresponds essentially to the cross sectional surface of the mounting part (7).

4. Friction damper according to any one of the preceding claims, **characterised in that** the friction lining (8, 9, 28, 29) and the impact element (15, 16, 32, 33) are arranged to be at least partly overlapping at right angles to the housing longitudinal axis.

5. Friction damper according to any one of the preceding claims, **characterised in that** an impact element (15, 16, 32, 33) is provided which extends essentially over the entire amplitude.

6. Friction damper according to any one of the preceding claims, **characterised in that** the dependency of the impact element (15, 16, 32, 33) on the amplitude is disproportionate and continuous.

7. Friction damper according to any one of the preceding claims, **characterised in that** the geometrical shape of the impact element (15, 16, 32, 33) is adapted to the desired dependency on the amplitude.

8. Friction damper according to any one of the preceding claims, **characterised in that** the impact element (15, 16, 32, 33) comprises at least one area (17, 34) which tapers in the direction of the housing longitudinal axis.

9. Friction damper according to any one of the preceding claims, **characterised in that** the area (17, 34) of the impact element (15, 16, 32, 33) has a trapezium or triangular shape.

10. Friction damper according to any one of the preceding claims, **characterised in that** at least approximately flat friction surfaces (10,11) are provided in the housing (2).

11. Friction damper according to any one of the preceding claims, **characterised in that** at least the amplitude-dependent impact element (15, 16, 32, 33) is made essentially of an elastomer and/or foam and/or rubber material.

12. Friction damper according to any one of the preceding claims, **characterised in that** at least one friction lining (33) surrounds the amplitude-dependent impact element (32, 33).

13. Friction damper according to any one of the preceding claims, **characterised in that** at least two friction linings (8, 9, 28, 29) are arranged on opposite sides of the plunger (4).

14. Friction damper according to any one of the preceding claims, **characterised in that** in circumferential direction and at right angles to the housing longitudinal axis between two friction linings (8, 9, 28, 29) the mounting part (7) comprises at least one guiding surface (12) for guiding on the plunger (4).

15. Friction damper according to any one of the preceding claims, **characterised in that** between the guiding surface (12) of the mounting part (7) and a guiding surface (12) of the plunger (4) a clearance is provided.

16. Friction damper according to any one of the preceding claims, **characterised in that** several impact elements are provided arranged next to one another at right angles to the housing longitudinal axis.

17. Drum washing machine, **characterised in that** the drum is secured to a friction damper according to one of the preceding claims in the chassis.

## Revendications

1. Amortisseur à friction notamment pour une machine à laver le linge à tambour avec un mode d'essorage, comportant un boîtier (2) ainsi qu'un poussoir (4) mobile dans le boîtier (2), parallèlement à l'axe longitudinal du boîtier et sortant du boîtier (2), l'extrémité du poussoir logé dans le boîtier (2) comportant au moins une fenêtre (6),
- la fenêtre (6) ayant au moins une pièce de réception (7) mobile longitudinalement par rapport au poussoir (4) pour recevoir une garniture de friction (8, 9) et au moins un élément de rebondissement (15, 16, 32, 33) indépendant de l'amplitude pour freiner le mouvement de la pièce de réception (7),
amortisseur **caractérisé en ce que**
l'élément de rebondissement (15, 16, 32, 33) est prévu entre une surface intérieure (20, 21) de la fenêtre (6) et une surface extérieure (18, 19) de la pièce de réception (7).

2. Amortisseur à friction selon la revendication 1,
**caractérisé en ce que**
la surface intérieure (20, 21) de la fenêtre (6) et la surface extérieure (18, 19) de la pièce de réception (7) sont alignées pratiquement transversalement à l'axe longitudinal du boîtier.

3. Amortisseur à friction selon l'une des revendications précédentes,
**caractérisé en ce que**
la surface intérieure (20, 21) de la fenêtre (6) et/ou la surface extérieure (18, 19) de la pièce de réception (7) correspondent pour l'essentiel à la surface de la section de la pièce de réception (7).

4. Amortisseur à friction selon l'une des revendications précédentes,
**caractérisé en ce que**
la garniture de friction (8, 9, 28, 29) et l'élément de rebondissement (15, 16, 32, 33) sont installés de façon à se chevaucher au moins partiellement dans la direction transversale à celle de l'axe longitudinal du boitier.

5. Amortisseur à friction selon l'une des revendications précédentes,
**caractérisé par**
un élément de rebondissement (15, 16, 32, 33) s'étendant principalement sur toute l'amplitude.

6. Amortisseur à friction selon l'une des revendications précédentes,
**caractérisé en ce que**
la relation entre l'élément de rebondissement (15, 16, 32, 33) et l'amplitude est plus que proportionnelle et continue.

7. Amortisseur à friction selon l'une des revendications précédentes,
**caractérisé en ce que**
la forme géométrique de l'élément de rebondissement (15, 16, 32, 33) est adaptée à sa fonction souhaitée par rapport à l'amplitude.

8. Amortisseur à friction selon l'une des revendications précédentes,
**caractérisé en ce que**
l'élément de rebondissement (15, 16, 32, 33) comporte au moins une zone (17, 34) qui va en diminuant en direction de l'axe longitudinal du boîtier.

9. Amortisseur à friction selon l'une des revendications précédentes,
**caractérisé en ce que**
la zone (17, 34) de l'élément de rebondissement (15, 16, 32, 33) a une forme trapézoïdale ou une forme triangulaire.

10. Amortisseur à friction selon l'une des revendications précédentes,
**caractérisé en ce que**
le boîtier (2) comporte des surfaces de friction (10, 11) au moins sensiblement planes.

11. Amortisseur à friction selon l'une des revendications précédentes,
**caractérisé en ce qu'**
au moins l'élément de rebondissement (15, 16, 32, 33) dépendant de l'amplitude est pour l'essentiel réalisé en un élastomère et/ou en une mousse et/ ou une matière de type caoutchouc.

12. Amortisseur à friction selon l'une des revendications précédentes,
**caractérisé en ce qu'**
au moins une garniture de friction (33) entoure l'élément de rebondissement (32, 33) dépendant de l'amplitude.

13. Amortisseur à friction selon l'une des revendications précédentes,
**caractérisé en ce qu'**
il comporte au moins deux garnitures de friction (8, 9, 28, 29) sur les côtés opposés du poussoir (4).

14. Amortisseur à friction selon l'une des revendications précédentes,
**caractérisé en ce que**
la pièce de réception (7) comporte au moins une surface de guidage (12) pour guider le poussoir (4), dans la direction périphérique et transversalement à l'axe longitudinal du boîtier entre deux garnitures de friction (8, 9, 28, 29).

15. Amortisseur à friction selon l'une des revendications précédentes,
**caractérisé par**
du jeu entre la surface de guidage (12) de la pièce de réception (7) et une surface de guidage (12) du poussoir (4).

16. Amortisseur à friction selon l'une des revendications précédentes,
**caractérisé par**
plusieurs éléments de rebondissements juxtaposés transversalement à l'axe longitudinal du boîtier.

17. Machine à laver le linge à tambour,
**caractérisée en ce que**
le tambour est équipé d'un amortisseur à friction selon l'une des revendications précédentes, l'amortisseur étant fixé au châssis.
